# EUROPÄISCHE PATENTSCHRIFT

(11) **EP 1 528 990 B1**
(45) Veröffentlichungstag und Bekanntmachung des Hinweises auf die Patenterteilung: **22.03.2006**
(21) Anmeldenummer: 03792186.3
(22) Anmeldetag: 09.07.2003
(51) Int. Cl.: B60K 17/22, F16D 3/227

(54) **LÄNGSWELLE**
LONGITUDINAL SHAFT
ARBRE LONGITUDINAL

(30) Priorität: 14.08.2002 DE 10237172
(43) Veröffentlichungstag der Anmeldung: 11.05.2005
(73) Patentinhaber: Shaft-Form-Engineering GmbH, 63165 Mühlheim am Main (DE)
(72) Erfinder: JACOB, Werner, 60599 Frankfurt am Main (DE)
(74) Vertreter: KEIL & SCHAAFHAUSEN Patentanwälte
(86) Internationale Anmeldenummer: PCT/EP2003/007386
(87) Internationale Veröffentlichungsnummer: WO 2004/018247

(56) Entgegenhaltungen:
- GB-A- 2 277 911
- US-B1- 6 171 196
- US-B1- 6 241 617
- US-B1- 6 379 255
- PATENT ABSTRACTS OF JAPAN vol. 016, no. 047 (M-1208), 6. Februar 1992 (1992-02-06) & JP 03 249430 A (NTN CORP), 7. November 1991 (1991-11-07)

## Beschreibung

Die Erfindung betrifft eine Längswelle, insbesondere für den Einsatz in Automobilen mit Allrad- oder Hinterradantrieb, mit einem getriebeseitigen Gelenk, einem differentialseitigen Gelenk und einem Mittengelenk, die jeweils eine Innennabe und eine diese wenigstens bereichsweise umgreifende Außennabe aufweisen, wobei über das Mittengelenk zwei Wellenabschnitte drehfest miteinander verbunden sind. Die Bezeichnungen "getriebeseitig" und "differentialseitig" werden dabei im Sinne dieser Erfindung rein exemplarisch zur Unterscheidung der beiden Enden der Längswelle verwendet.

Bei Automobilen, die einen üblicherweise in Fahrtrichtung vorne eingebauten Motor mit Getriebe aufweisen, wird das Antriebsdrehmoment des Motors für den Hinterradantrieb über eine in Fahrtrichtung angeordnete Längswelle an das Hinterachsdifferential übertragen. Die Längswelle wird dabei durch häufig wechselnde Drehmomente und Drehzahlen sowie Laststöße bis zum zehnfachen des Nenndrehmomentes starken Belastungen ausgesetzt. Gleichzeitig sollen die von der Längswelle erzeugten Vibrationen und Geräusche möglichst gering gehalten werden. Die US 6 379 255 A zeigt die Merkmale des Oberbegriffes des Anspruches 1.

Üblicherweise wird eine Längswelle der eingangs genannten Art über eine Flanschverbindung mit den Außenringen des getriebeseitigen Gelenks und des differentialseitigen Gelenks an der Getriebeausgangswelle bzw. der Differentialeingangswelle verdrehsicher befestigt. Diese Flanschverbindung dient gleichzeitig der Zentrierung der Längswelle. Bei den im Betrieb häufig auftretenden hohen Drehzahlen der Längswelle zwischen 8 000 und 10 000 Umdrehungen pro Minute werden jedoch bereits durch kleine Unwuchten der Längswelle infolge einer unzureichenden Zentrierung hohe Fliehkräfte in der Längswelle erzeugt, die zu Vibrationen und störenden Geräuschen führen.

Es ist daher Aufgabe der Erfindung, eine Längswelle der eingangs genannten Art bereitzustellen, bei welcher die Vibrationen und Geräusche erzeugenden Fliehkräfte weitestgehend reduziert werden.

Diese Aufgabe wird erfindungsgemäß dadurch gelöst, dass die Innennaben des getriebeseitigen Gelenks sowie des differentialseitigen Gelenks eine mit einer Steckverzahnung versehene zentrale Bohrung zur drehfesten Verbindung und Zentrierung der Längswelle an Wellenzapfen einer Getriebeausgangswelle bzw. einer Differentialeingangswelle aufweisen. Der Erfindung liegt dabei der Gedanke zugrunde, dass der gegenüber einer Flanschzentrierung deutlich kleinere Zentrierdurchmesser einer Steckverbindung zwischen der Innennabe des getriebeseitigen Gelenks und des differentialseitigen Gelenks mit der Getriebeausgangswelle bzw. der Differentialeingangswelle bei gleicher Toleranzgüte eine wesentliche Verringerung der Unwucht der Längswelle ermöglicht. Auf diese Weise werden auch die durch die Unwucht erzeugten Fliehkräfte reduziert, wodurch der Komfort des Fahrzeuges durch geringere Vibrationen und Geräusche des Antriebsstranges gesteigert wird. Die Verbindung zwischen der Getriebeausgangswelle und der Differentialeingangswelle durch die Längswelle erfolgt dabei, indem die profilierte Innennabe des getriebeseitigen Gelenks der Längswelle auf einen entsprechend profilierten Zapfen der Getriebeausgangswelle aufgesteckt wird und die Innennabe des differentialseitigen Gelenks auf einen Zapfen der Differentialeinganswelle aufgeschoben wird. Auf diese Weise wird sowohl eine drehfeste Verbindung zwischen der Getriebeausgangswelle und der Differentialeingangswelle durch die Längswelle hergestellt als auch eine Zentrierung der Längswelle erreicht.

Die Zentrierung der beiden Abschnitte der Längswelle über das Mittengelenk kann verbessert werden, wenn das Mittengelenk ebenfalls eine Innennabe mit einer zentralen Bohrung, die mit einer Steckverzahnung versehen ist, aufweist, die einen entsprechenden Zapfen eines Wellenabschnittes des Längswelle zur drehfesten Steckzentrierung aufnimmt. Die Verbindung der beiden Abschnitte der Längswelle in dem Mittengelenk erfolgt dabei im Wesentlichen in gleicher Weise wie der Anschluss der Getriebeausgangswelle und der Differentialeingangswelle an die Längswelle.

In Weiterbildung des Erfindungsgedankens ist es vorgesehen, dass die beiden Wellenabschnitte der Längswelle als Wellenrohre ausgebildet sind und die Außennaben des getriebeseitigen Gelenks, des differentialseitigen Gelenks und des Mittengelenks direkt an die Wellenrohre angebundene Blechumformteile sind. Weitestgehende Verwendung von Blechumformteilen in den Gelenken der Längswelle, die bspw. über eine Schweißnaht direkt an die Längswellenrohre angebunden werden, verringern das Gesamtgewicht der Längswelle. Die Minimierung des Gewichtes der Längswelle trägt neben der verbesserten Zentrierung ebenfalls zur Verringerung der auftretenden Fliehkräfte bei.

In dem getriebeseitigen Gelenk sowie in dem Mittengelenk treten im Betrieb üblicherweise nur sehr geringe Beugewinkel auf, so dass der Einsatz eines Gleichlaufgelenkes in dem getriebeseitigen Gelenk oder dem Mittengelenk der Längswelle keine deutlichen Verbesserungen der Gleichlaufeigenschaften mit sich bringen würde. Um eine optimale Wirtschaftlichkeit der erfindungsgemäßen Längswelle zu erzielen, wird es daher bevorzugt, das getriebeseitige Gelenk und/oder das Mittengelenk als Verschiebegelenk auszuführen.

Wenn das getriebeseitige Gelenk und das Mittengelenk als Verschiebegelenke ausgebildet sind und einen gemeinsamen Montage-Verschiebeweg aufweisen, der zumindest einer Länge entspricht, die die Getriebeausgangswelle oder die Differentialeingangswelle im Betrieb in die Innennabe des getriebeseitigen Gelenks bzw. des differentialseitigen Gelenks hineinragt, lässt sich die erfindungsgemäße Längswelle besonders einfach zwischen der Getriebeausgangswelle und der Differentialeingangswelle montieren.

Da die Betriebsbeugewinkel des differentialseitigen Gelenks der Längswelle üblicherweise in einem Bereich liegen, die deutlich über denen des getriebeseitigen Gelenks und des Mittengelenks liegen, wird es zur Verbesserung der Gleichlaufeigenschaften bevorzugt, das differentialseitige Gelenk als ein Gleichlaufgelenk auszubilden.

Nach einer bevorzugten Ausführungsform der Erfindung weist der getriebeseitige Wellenabschnitt der Längswelle einen Durchmesser auf, der von dem des differentialseitigen Wellenabschnittes derart abweicht, dass die beiden Wellenabschnitte teleskopartig aufeinander schiebbar sind. Bei dieser Ausgestaltung der Längswelle wird vermieden, dass die Längswelle bei einer Stauchung, bspw. infolge eines Unfalls, ausknickt und in den Fahrzeuginnenraum eindringt. Vielmehr schieben sich die beiden Wellenabschnitte der Längswelle bei einer Stauchung teleskopartig ineinander, so dass eine Gefährdung der Passagiere im Fahrzeuginnenraum durch die Längswelle reduziert wird.

Die Erfindung wird nachfolgend anhand eines Ausführungsbeispiels und unter Bezugnahme auf die Zeichnung näher erläutert.

Es zeigen:
- Fig. 1: eine erfindungsgemäße Längswelle in Schnittansicht und
- Fig. 2: eine Detailansicht des getriebeseitigen Gelenks.

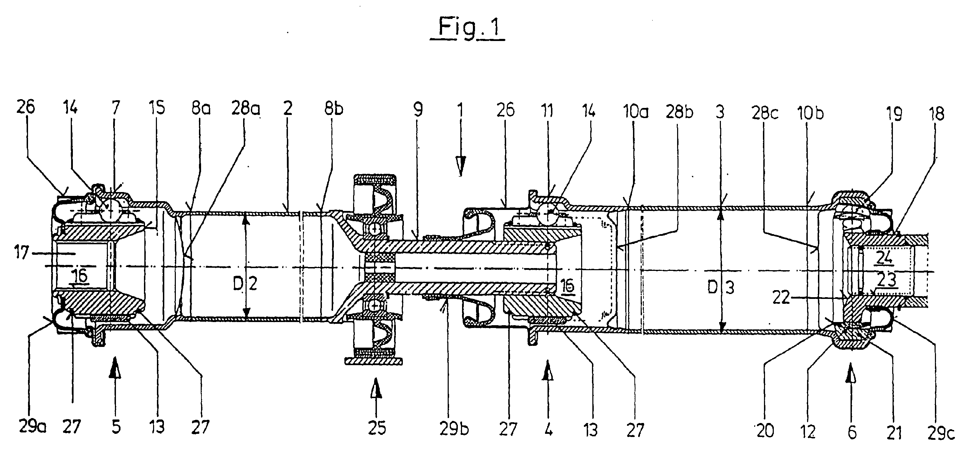

Die in Fig. 1 dargestellte Längswelle 1 weist zwei als Wellenrohre ausgebildete Wellenabschnitte 2 und 3 auf, die durch ein Mittengelenk 4 miteinander verbunden sind. Das in der Figur linke Ende der Längswelle 1 ist die in Fahrzeugen üblicherweise in Fahrtrichtung vorne angeordnete Getriebeseite, während das in der Figur rechte Ende der Längswelle 1 im Einbauzustand einem Hinterachsdifferential zugewandt ist.

Der getriebeseitige Wellenabschnitt 2 der Längswelle 1 mündet auf seiner dem Mittengelenk 4 abgewandten Seite in ein getriebeseitiges Gelenk 5, während der zweite Wellenabschnitt 3 an seinem dem Mittengelenk 4 abgewandten Ende ein differentialseitiges Gelenk 6 aufweist. Die Wellenabschnitte 2 und 3 sind als Blechrohre ausgebildet, wobei das den getriebeseitigen Wellenabschnitt 2 der Längswelle 1 bildende Rohr getriebeseitig mit der als Blechumformteil ausgebildeten Außennabe 7 des getriebeseitigen Gelenks 5 über eine Schweißnaht 8 verbunden ist und auf seiner dem Mittengelenk 4 zugewandten Seite mit einem Hohlwellenzapfen 9 verschweißt ist. Das den differentialseitigen Wellenabschnitt 3 der Längswelle 1 bildende Rohr ist über Schweißnähte 10a bzw. 10b mit der Außennabe 11 des Mittengelenks 4 bzw. der Außennabe 12 des differentialseitigen Gelenks 6 verbunden, die beide als Blechumformteile ausgebildet sind.

Der Außendurchmesser D₂ des getriebeseitigen Wellenabschnittes 2 der Längswelle 1 ist etwas kleiner als der Innendurchmesser D₃ des differentialseitigen Wellenabschnittes 3 der Längswelle 1, so dass die beiden Wellenabschnitte 2 und 3 teleskopartig ineinander schiebbar sind.

Das getriebeseitige Gelenk 5 sowie das Mittengelenk 4 sind Verschiebegelenke, die von außen nach innen die Außennabe 7 bzw. 11, einen Käfig 13, in welchem mehrere Kugeln 14 geführt sind, und eine Innennabe 15 aufweisen. Die Innennabe ist dabei mit einer zentralen Bohrung 16 versehen, welche eine Steckverzahnung 17 zur drehfesten Verbindung und Zentrierung mit einem entsprechend profilierten Wellenzapfen aufweist.

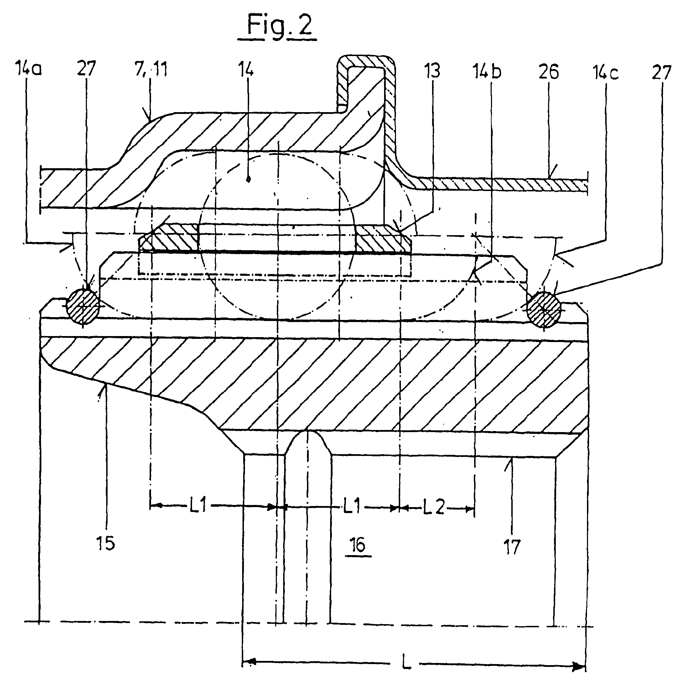

Auf der Außenseite der Innennabe 15 und der Innenseite der Außennabe 7 bzw. 11 sind in axialer Richtung der Längswelle 1 verlaufende Kugelbahnen ausgebildet, in denen die durch den Käfig 13 geführten Kugeln 14 rollen bzw. gleiten können, um eine Axialverschiebung zwischen der Außennabe 7 bzw. 12 und der Innennabe 15 zu ermöglichen. Der Käfig 13 kann dabei, wie in Fig. 2 dargestellt, axial verschiebbar auf der Innennabe 15 geführt sein oder eine Käfigführung in der Außennabe (nicht dargestellt) aufweisen.

Das differentialseitige Gelenk 6 der Längswelle 1 ist als ein Gegenbahngleichlaufgelenk mit einer profilierten Innennabe 18, einem mehrere Kugeln 19 führenden Käfig 20 und der mit einem Einsatz 21 versehenen Außennabe 12 aufgebaut. In der Innennabe 18 ist dabei eine zentrale Bohrung 22 mit einer Steckverzahnung 23 zur drehfesten Aufnahme und Zentrierung eines entsprechend profilierten Zapfens 24 einer Differentialeingangswelle vorgesehen.

Der mit dem getriebeseitigen Abschnitt 2 der Längswelle 1 verbundene Zapfen 9 ist über eine Kugellagereinheit 25 elastisch gelagert. Weiter wird die Längswelle 1 durch die in den Innennaben 15 und 18 der getriebeseitigen und differentialseitigen Gelenke 5 bzw. 6 zentriert und gelagert.

Die Montage der Längswelle 1 zwischen dem Zapfen einer Getriebeausgangswelle (nicht dargestellt) und dem Zapfen 24 einer Differentialeingangswelle erfolgt bspw., indem zunächst die Innennabe 15 des getriebeseitigen Gelenkes 5 auf den entsprechenden Zapfen der Getriebeausgangswelle aufgesteckt wird. Das getriebeseitige Gelenk 5 sowie das Mittengelenk 4, die beide als Verschiebegelenke ausgebildet sind, lassen sich aus ihrer in Fig. 2 dargestellten mittleren Betriebsposition der Kugeln 14 axial in beide Richtungen um die Länge I₁ verschieben, bevor die Kugeln 14 an die durch die Außennabe 7 bzw. 11 vorgegebene Begrenzung anschlagen, die durch die strichpunktierten Linien 14a und 14b angedeutet sind. In jedem Verschiebegelenk lässt sich auf diese Weise die Innennabe unter Abrollen der Kugeln 14 relativ zu der Außennabe aus der in Fig. 2 gezeigten Position in beide Richtungen um die Länge I₁ auslenken.

Zusätzlich kann die Innennabe 15 relativ zu der Außennabe 7 bzw. 11 um die Länge I₂ unter Gleiten der Kugeln 14 auf der Innennabe 15 verschoben werden, wenn die Kugeln an dem mit der Außennabe verbundenen Begrenzungsanschlag 26 anliegen. Die maximale Bewegung der Kugeln 14 auf der Innennabe 15 wird dabei durch Sprengringe 27 begrenzt.

Der Montageverschiebeweg des getriebeseitigen Gelenks 5 sowie des Mittengelenks 4, der sich jeweils aus den Längen I₁ + I₂ zusammensetzt, entspricht zumindest der Hälfte der Länge L, mit der der Zapfen 24 der Differentialeingangswelle in die Innennabe 18 des differentialseitigen Gelenks 6 im Betrieb hineinragt. Die Längswelle 1 lässt sich dadurch in dem getriebeseitigen Gelenk 5 und dem Mittengelenk 4 soweit ineinander schieben, dass die Innennabe 18 des differentialseitigen Gelenks 6 fluchtend zu dem Zapfen 24 der Differentialeingangswelle ausgerichtet werden kann. Durch Verschieben der Innennaben 15 relativ zu den Außennaben 7 bzw. 11 in dem getriebeseitigen Gelenk 5 und dem Mittengelenk 4 wird die Innennabe 18 des differentialseitigen Gelenks 6 auf den Zapfen 24 der Differentialeingangswelle aufgeschoben. Dabei wird die Längswelle 1 gleichzeitig mit der Differentialeingangswelle zentriert.

Die Gelenke 4, 5 und 6 der Längswelle 1 können zudem durch Schutzbleche 28a, 28b und 28c sowie durch Faltbälge 29a, 29b und 29c abgedichtet und gegen das Eindringen von Schmutz geschützt werden.

### Bezugszeichenliste:

- 1: Längswelle
- 2: getriebeseitiger Abschnitt der Längswelle 1
- 3: differentialseitiger Abschnitt der Längswelle 1
- 4: Mittengelenk
- 5: getriebeseitiges Gelenk
- 6: differentialseitiges Gelenk
- 7: Außennabe des Gelenks 5
- 8: Schweißnaht
- 9: Wellenzapfen
- 10a: Schweißnaht
- 10b: Schweißnaht
- 11: Außennabe des Gelenks 4
- 12: Außennabe des Gelenks 6
- 13: Käfig der Gelenke 4 und 5
- 14: Kugel der Gelenke 4 und 5
- 14a: Verschiebeposition der Kugel 14
- 14b: Verschiebeposition der Kugel 14
- 14c: Verschiebeposition der Kugel 14
- 15: Innennabe der Gelenke 4 bzw. 5
- 16: zentrale Bohrung der Innennabe 15
- 17: Steckverzahnung
- 18: Innennabe des Gelenks 6
- 19: Kugel des Gelenks 6
- 20: Käfig des Gelenks 6
- 21: Einsatz
- 22: Bohrung der Innennabe 18
- 23: Steckverzahnung der Innennabe 18
- 24: Zapfen der Differentialeingangswelle
- 25: Kugellagereinheit
- 26: Begrenzungsanschlag
- 27: Sprengring
- 28a: Schutzblech
- 28b: Schutzblech
- 28c: Schutzblech
- 29a: Faltbalg
- 29b: Faltbalg
- 29c: Faltbalg

## Patentansprüche

1. Längswelle, insbesondere für den Einsatz in Automobilen mit Allrad- oder Hinterradantrieb, mit einem getriebeseitigen Gelenk (5), einem differentialseitigen Gelenk (6) und einem Mittengelenk (4), die jeweils eine Innennabe (15, 18) und eine diese wenigstens bereichsweise umgreifende Außennabe (7, 11, 12) aufweisen, wobei über das Mittengelenk (4) zwei Wellenabschnitte (2, 3) der Längswelle (1) drehfest miteinander verbunden sind, **dadurch gekennzeichnet, dass** die Innennaben (15, 18) des getriebeseitigen Gelenks (5) und des differentialseitigen Gelenks (6) eine mit einer Steckverbindung (17, 23) versehene zentrale Bohrung (16, 22) zur drehfesten Verbindung und Zentrierung der Längswelle (1) an Wellenzapfen (24) einer Getriebeausgangswelle bzw. einer Differentialeingangswelle aufweisen.

2. Längswelle nach Anspruch 1, **dadurch gekennzeichnet, dass** das Mittengelenk (4) eine Innennabe (15) mit einer zentralen Bohrung (16), die mit einer Steckverzahnung (17) versehen ist, aufweist, welche einen Zapfen (9) eines Wellenabschnitts (2) der Längswelle (1) zur drehfesten Steckzentrierung aufnimmt.

3. Längswelle nach einem der vorhergehenden Ansprüche, **dadurch gekennzeichnet, dass** die beiden Wellenabschnitte (2, 3) der Längswelle (1) als Wellenrohre ausgebildet sind und die Außennaben (7, 11, 12) des getriebeseitigen Gelenks (5), des differentialseitigen Gelenks (6) und des Mittengelenks (4) direkt an die Wellenrohre angebundene Blechumformteile sind.

4. Längswelle nach einem der vorhergehenden Ansprüche, **dadurch gekennzeichnet, dass** das getriebeseitige Gelenk (5) und/oder das Mittengelenk (4) Verschiebegelenke sind.

5. Längswelle nach Anspruch 4, **dadurch gekennzeichnet, dass** die Verschiebegelenke (4, 5) gemeinsam einen Montageverschiebeweg (2 I₁ + 2 I₂) aufweisen, der zumindest einer Länge (L) entspricht, die die Getriebeausgangswelle oder die Differentialeingangswelle (24) im Betrieb in die Innennabe (15, 18) des getriebeseitigen Gelenks (5) bzw. des differentialseitigen Gelenks (6) hineinragt.

6. Längswelle nach einem der vorhergehenden Ansprüche, **dadurch gekennzeichnet, dass** das differentialseitige Gelenk (6) ein Gleichlaufgelenk ist.

7. Längswelle nach einem der vorhergehenden Ansprüche, **dadurch gekennzeichnet, dass** der getriebeseitige Wellenabschnitt (2) einen Durchmesser (D₂) aufweist, der von dem (D₃) des differentialseitigen Wellenabschnitts (3) derart abweicht, dass die beiden Wellenabschnitte (2, 3) der Längswelle (1) teleskopartig aufeinander schiebbar sind.

## Claims

1. A longitudinal shaft, in particular for use in motor vehicles having a four-wheel or rear-wheel drive, comprising a gearbox-side joint (5), a differential-side joint (6) and a central joint (4), which in each case comprise an inner hub (15, 18) and an outer hub (7, 11, 12) enclosing at least some parts thereof, wherein two shaft portions (2, 3) of the longitudinal shaft (1) are connected to each other in torque-proof manner via the central joint (4),
**characterised in that** the inner hubs (15, 18) of the gearbox-side joint (5) and of the differential-side joint (6) comprise a central bore (16, 22) provided with a plug-in connection (17, 23) for the torque-proof connection and centring of the longitudinal shaft (1) to shaft journals (24) of a gearbox output shaft or a differential input shaft.

2. A longitudinal shaft according to Claim 1,
**characterised in that** the central joint (4) comprises an inner hub (15) having a central bore (16), which is provided with plug-in toothing (17), which houses a journal (9) of a shaft portion (2) of the longitudinal shaft (1) for torque-proof plug-in centring.

3. A longitudinal shaft according to one of the preceding Claims,
**characterised in that** the two shaft portions (2, 3) of the longitudinal shaft (1) are constructed as shaft tubes and the outer hubs (7, 11, 12) of the gearbox-side joint (5), of the differential-side joint (6) and of the central joint (4) are sheet metal formed parts directly connected to the shaft tubes.

4. A longitudinal shaft according to one of the preceding Claims,
**characterised in that** the gearbox-side joint (5) and/or the central joint (4) are plunging joints.

5. A longitudinal shaft according to Claim 4,
**characterised in that** the plunging joints (4, 5) jointly comprise an assembly displacement path (2 l₁ + 2 l₂), which corresponds with at least a length (L) which during operation extends into the inner hub (15, 18) of the gearbox-side joint (5) or of the differential-side joint (6).

6. A longitudinal shaft according to one of the preceding Claims,
**characterised in that** the differential-side joint (6) is a constant velocity joint.

7. A longitudinal shaft according to one of the preceding Claims,
**characterised in that** the gearbox-side shaft portion (2) has a diameter (D₂) which differs from that (D₃) of the differential-side shaft portion (3) in such a manner that the two shaft portions (2, 3) of the longitudinal shaft can be telescopically pushed onto each other.

## Revendications

1. Arbre longitudinal, notamment pour une utilisation dans des automobiles à transmission intégrale ou à propulsion arrière, avec une articulation (5) située du côté moteur, une articulation (6) située du côté du différentiel et une articulation centrale (4), qui sont chacune munies d'un moyeu interne (15, 18) et d'un moyeu externe (7, 11, 12) l'entourant au moins par zones, deux sections d'arbre (2, 3) de l'arbre longitudinal (1) étant reliées ensemble bloquées entre elles en rotation par l'intermédiaire de l'articulation centrale (4), **caractérisé en ce que** les moyeux centraux (15, 18) de l'articulation située du côté de la transmission et de l'articulation (6) située du côté du différentiel sont munis d'un trou central (16, 22) muni d'un connecteur enfichable (17, 23) pour la fixation bloquée en rotation et le centrage de l'arbre longitudinal (1) au tourillon de l'arbre pivot (24) d'un arbre de sortie d'entraînement ou d'un arbre d'entrée de différentiel.

2. Arbre longitudinal selon la revendication 1, **caractérisé en ce que** l'articulation centre (4) est munie d'un moyeu interne (15) ayant un trou central (16) qui est équipé d'une denture de connexion (17) et qui reçoit un pivot (9) d'une section d'arbre (2) de l'arbre longitudinal (1) en vue d'un centrage par enfichage bloqué en rotation.

3. Arbre longitudinal selon l'une des revendications précédentes, **caractérisé en ce que** les deux sections d'arbre (2, 3) de l'arbre longitudinal (1) sont conçues sous la forme d'arbres tubulaires et les moyeux externes (7, 11, 12) de l'articulation (5) située du côté du moteur, de l'articulation (6) située du côté du différentiel et de l'articulation centrale (4) sont des pièces formées en tôle fixées directement aux arbres tubulaires.

4. Arbre longitudinal selon l'une des revendications précédentes, **caractérisé en ce que** l'articulation (5) située du côté du moteur et/ou l'articulation centrale (4) sont des joints coulissants.

5. Arbre longitudinal selon la revendication 4, **caractérisé en ce que** les joints coulissants (4, 5) ont ensemble une course de coulissement pour le montage (2 l₁ + 2 l₂) qui correspond au moins à une longueur (L) de laquelle l'arbre de sortie d'entraînement ou l'arbre d'entrée de différentiel (24) pénètre en fonctionnement dans le moyeu interne (15, 18) de l'articulation située du côté du moteur (5) ou de l'articulation située du côté du différentiel respectivement.

6. Arbre longitudinal selon l'une des revendications précédentes, **caractérisé en ce que** l'articulation située du côté du différentiel (6) est un joint homocinétique.

7. Arbre longitudinal selon l'une des revendications précédentes, **caractérisé en ce que** la section d'arbre (2) située du côté du moteur a un diamètre (D₂) qui se différentie de celui (D₃) de la section d'arbre (3) située du côté du différentiel de telle sorte que les deux sections d'arbre (2, 3) de l'arbre longitudinal (1) peuvent coulisser l'une dans l'autre de façon télescopique.
